# EUROPEAN PATENT APPLICATION

(11) **EP 4 462 830 A1**
(43) Date of publication of application: **13.11.2024**
(21) Application number: 22918454.4
(22) Date of filing: 27.12.2022
(51) Int. Cl.: H04W 4/70

(54) **INFORMATION TRANSMISSION METHOD AND APPARATUS, AND INFORMATION TRANSMISSION DEVICE**

(30) Priority: 07.01.2022 CN 202210015262
(71) Applicant: Datang Mobile Communications Equipment Co., Ltd., Beijing 100085 (CN)
(72) Inventor: ZHAO, Yali, Beijing 100085 (CN)
(74) Representative: Maiwald GmbH
(86) International application number: PCT/CN2022/142501
(87) International publication number: WO 2023/131013

(57) **Abstract**

An information transmission method, a device and information transmission apparatus are provided. The method includes: receiving sidelink control information (SCI) sent by a first terminal; sending assistance information to a second device, where the assistance information is generated according to the SCI.

## Description

### CROSS REFERENCE OF RELATED APPLICATION

The present disclosure claims a priority of Chinese patent disclosure No. 202210015262.X filed on January 7, 2022, which is incorporated herein by reference in its entirety.

### TECHNICAL FIELD

The present disclosure relates to the field of wireless technology, and in particular to an information transmission method, a device and information transmission apparatus.

### BACKGROUND

Direct communication refers to the way that adjacent terminals can transmit data within a short range through a direct communication link (also called Sidelink, bypass or PCS link). The wireless interface corresponding to the Sidelink link is called the sidelink interface (also called Sidelink interface or PCS interface). In order to expand network coverage, it is possible to consider introducing a relay. The relay itself can be a terminal with relay function. For the user-to-network relay (UE-to-Network Relay, U2N relay), the interface between the relay and the network uses the Uu interface, and the interface between the relay and the relayed UE (also called the remote UE) uses the sidelink interface (also called the Sidelink interface or PCS interface). The link between the relay and the network can be called a backhaul link for the remote user equipment (User Equipment, UE).

In the L2 U2N scenario, after the relay terminal (relay UE) receives the sidelink interface control information (Sidelink Control Information, SCI) from the remote terminal (remote UE), it first decodes the SCI, and then receives the data of the sidelink interface according to the instructions of the SCI. Then, the relay UE determines whether it is necessary to trigger the Uu interface buffer status reporting (Buffer Status Reporting, BSR) according to the triggering conditions of the Uu interface buffer status reporting (BSR) based on the data received from the remote UE. If the Uu BSR triggering conditions are met, the relay UE reports the BSR to the base station serving it. At this time, if the relay has no uplink resources available, it may also trigger a scheduling request (Scheduling Request, SR) to obtain the transmission resources of the BSR. The base station allocates Uu interface uplink resources to the relay UE according to the BSR. Then the relay UE uses the uplink resources to forward the data received from the remote UE to the base station.

In the above relay transmission system, after receiving data from the remote UE, the relay UE needs to request resources through the SR/BSR process. Both the SR and BSR processes require at least one round trip time (RTT). If the retransmission of SR/BSR is considered, it will take even longer. Therefore, the above method cannot meet the end-to-end delay requirements of delay-sensitive services. Therefore, it is necessary to consider an optimization mechanism to reduce the end-to-end delay of the relay system.

### SUMMARY

In order to solve the above technical problems, the purpose of the present disclosure is to provide an information transmission method, device and information transmission equipment, which are used to solve the problem of long delay in the process of remote terminal transmitting data with the opposite terminal using relay in the related technology.

An information transmission method is provided in the embodiment of the present disclosure, which is performed by a first device and includes:
receiving sidelink control information (SCI) sent by a first terminal;
sending assistance information to a second device, where the assistance information is generated according to the SCI.

Optionally, the information transmission method further includes: after receiving the SCI sent by the first terminal, in a case that the SCI includes resource reservation information, generating the assistance information according to the SCI.

Optionally, the resource reservation information includes at least one of the following:
resource reservation information of initial transmission resources of sidelink interface;
resource reservation information of retransmission resources of sidelink interface.

Optionally, the second device is one of the following:
a network device accessed by a first device through a Uu interface;
a device responsible for scheduling sidelink interface resources between the first device and a second terminal;
where the second terminal is a communication peer that performs a relay communication with the first terminal through the first device.

Optionally, the assistance information includes at least one of the following:
time domain resource indication information;
data size.

Optionally, the time domain resource indication information is determined according to the resource reservation information carried by the SCI.

Optionally, the data size is determined according to the resource reservation information carried by the SCI and a modulation and coding scheme (MCS) carried by the SCI.

Optionally, the time domain resource indication information is configured to indicate time domain resource information corresponding to an initial transmission and/or a retransmission.

Optionally, the time domain resource indication information indicating the time domain resource information corresponding to the retransmission includes: indicating a specific time domain resource corresponding to each retransmission.

Optionally, the time domain resource indication information indicating the time domain resource information corresponding to the initial transmission includes one of the following:
indicating a starting position and a period of the time domain resource corresponding to the initial transmission;
indicating a starting position, a period and a number of repetitions of the time domain resource corresponding to the initial transmission; or
indicating a starting position, a period and a resource end time of the time domain resource corresponding to the initial transmission.

Optionally, the SCI is a first-stage SCI or a second-stage SCI.

Optionally, the information transmission method further includes:
receiving a sidelink interface configuration resource sent by the second device according to the assistance information;
forwarding sidelink interface data sent by the first terminal, through the sidelink interface configuration resource.

Optionally, in a case that the second device is the network device accessed by the first device through the Uu interface, the sidelink interface configuration resource includes at least one of the following:
a first type of pre-configured grant for the Uu interface configured for the first device;
a second type of pre-configured grant for the Uu interface configured for the first device; or
a dynamically scheduled resource for the Uu interface configured for the first device.

Optionally, the information transmission method further includes:
forwarding, to the second device, the data which is sent by the first terminal through the sidelink interface, by pre-configuring grant information or dynamically scheduling resources for the Uu interface configured for the first device.

Optionally, in a case that the second device is the device responsible for scheduling the sidelink interface resources between the first device and the second terminal, the sidelink interface configuration resources include at least one of the following:
a first type of pre-configured grant configured for a sidelink interface between the first device and the second terminal;
a second type of pre-configured grant configured for a sidelink interface between the first device and the second terminal; or
a dynamically scheduled resource configured for a sidelink interface between the first device and the second terminal.

Optionally, the information transmission method further includes:
forwarding, to the second terminal, the data which is sent by the first terminal through the sidelink interface, through the sidelink interface configuration resource.

Optionally, the device responsible for scheduling the sidelink interface resources between the first device and the second terminal is the second terminal, or a third terminal different from the first terminal and the second terminal.

An information transmission method is further provided in the embodiment of the present disclosure, performed by a second device, including:
receiving assistance information sent by a first device, where the assistance information is generated by the first device according to sidelink control information (SCI) sent by a first terminal.

Optionally, the second device is one of the following:
a network device accessed by a first device through a Uu interface;
a device responsible for scheduling sidelink interface resources between the first device and a second terminal;
where the second terminal is a communication peer that performs a relay communication with the first terminal through the first device.

Optionally, the assistance information includes at least one of the following:
time domain resource indication information;
data size.

Optionally, the time domain resource indication information is determined according to the resource reservation information carried by the SCI.

Optionally, the data size is determined according to the resource reservation information carried by the SCI and a modulation and coding scheme (MCS) carried by the SCI.

Optionally, the time domain resource indication information is configured to indicate time domain resource information corresponding to an initial transmission and/or a retransmission.

Optionally, the time domain resource indication information indicating the time domain resource information corresponding to the retransmission includes: indicating specific time domain resource corresponding to each retransmission.

Optionally, the time domain resource indication information indicating the time domain resource information corresponding to the initial transmission includes one of the following:
indicating a starting position and a period of the time domain resource corresponding to the initial transmission;
indicating a starting position, a period and a number of repetitions of the time domain resource corresponding to the initial transmission; or
indicating a starting position, a period and a resource end time of the time domain resource corresponding to the initial transmission.

Optionally, the information transmission method further includes:
determining, according to the assistance information, a sidelink interface configuration resource of the first device;
sending the sidelink interface configuration resource to the first device.

Optionally, in a case that the second device is the network device accessed by the first device through the Uu interface, the sidelink interface configuration resource includes at least one of the following:
a first type of pre-configured grant for the Uu interface configured for the first device;
a second type of pre-configured grant for the Uu interface configured for the first device; or
a dynamically scheduled resource for the Uu interface configured for the first device;
a time domain position of the resource indicated in the pre-configured grant or the dynamically scheduled resource matches a time domain position of the resource indicated in the assistance information.

Optionally, in a case that the second device is a device responsible for scheduling sidelink interface resources between the first device and the second terminal, the sidelink interface configuration resources include at least one of the following:
a first type of pre-configured grant configured for a sidelink interface between the first device and the second terminal; where the second terminal is a communication peer that performs a relay communication with the first terminal through the first device;
a second type of pre-configured grant configured for a sidelink interface between the first device and the second terminal;
a dynamically scheduled resource configured for a sidelink interface between the first device and the second terminal.

An information transmission device is provided in the embodiment of the present disclosure, where the information transmission device is a first device and includes a memory, a transceiver and a processor:
the memory is configured to store a computer program; a transceiver is configured to send and receive data under a control of the processor; and a processor is configured to read the computer program in the memory to perform:
receiving sidelink control information (SCI) sent by a first terminal;
sending assistance information to a second device, where the assistance information is generated according to the SCI.

Optionally, the processor is further configured to perform:
after receiving the SCI sent by the first terminal, in a case that the SCI includes resource reservation information, generating the assistance information according to the SCI.

Optionally, the assistance information includes at least one of the following:
time domain resource indication information;
data size.

Optionally, the time domain resource indication information is determined according to the resource reservation information carried by the SCI.

Optionally, the data size is determined according to resource reservation information carried by the SCI and a modulation and coding scheme (MCS) carried by the SCI.

Optionally, the processor is further configured to perform:
receiving a sidelink interface configuration resource sent by the second device according to the assistance information;
forwarding sidelink interface data sent by the first terminal, through the sidelink interface configuration resource.

An information transmission device is provided in the embodiment of the present disclosure, where the information transmission device is a second device and includes a memory, a transceiver and a processor:
the memory is configured to store a computer program; a transceiver is configured to send and receive data under a control of the processor; and a processor is configured to read the computer program in the memory to perform:
receiving assistance information sent by a first device, where the assistance information is generated by the first device according to sidelink control information (SCI) sent by a first terminal.

Optionally, the processor is further configured to perform:
determining, according to the assistance information, a sidelink interface configuration resource of the first device;
sending the sidelink interface configuration resource to the first device.

An information transmission apparatus is provided in the embodiment of the present disclosure, applied to a first device and including:
a first receiving module, configured to receive sidelink control information (SCI) sent by a first terminal;;
a first sending unit, configured to send assistance information to a second device, where the assistance information is generated according to the SCI.

An information transmission apparatus is provided in the embodiment of the present disclosure, applied to a second device and including:
a second receiving unit, configured to receive assistance information sent by a first device, where the assistance information is generated by the first device according to sidelink control information (SCI) sent by a first terminal.

A processor-readable storage medium is provided in the embodiment of the present disclosure, storing a computer program, where the computer program is configured to enable a processor to perform the information transmission method hereinabove.

The beneficial effects of the above technical solution disclosed in the present invention are as follows:
According to the information transmission method in the embodiment of the present disclosure, after the first device receives the SCI sent by the first terminal, the first device may generate assistance information according to the SCI and send the assistance information to the second device, thereby ensuring that the second device can determine the time when the data arrives at the first device according to the indication in the assistance information, and allocating the resources required for the data transmission in advance, thereby reducing the time required for data forwarding by the relay UE and reducing the end-to-end transmission delay of the service.

### BRIEF DESCRIPTION OF THE DRAWINGS

Fig.1 is a schematic view of a structure of a first embodiment of an application system using the information transmission method according to the embodiment of the present disclosure;
Fig.2 is a schematic view of the structure of a second embodiment of an application system using the information transmission method according to the embodiment of the present disclosure;
Fig.3 is a schematic view of a flow chart of an information transmission method according to the embodiment of the present disclosure;
Fig.4 is a flow chart of a first embodiment of the information transmission method according to the embodiment of the present disclosure;
Fig.5 is a flow chart of a second implementation of the information transmission method according to the embodiment of the present disclosure;
Fig.6 is a flow chart of a third embodiment of the information transmission method according to the embodiment of the present disclosure;
Fig.7 is a flow chart of an information transmission method according to another embodiment of the present disclosure;
Fig.8 is a schematic view of a structure of an information transmission device according to the embodiment of the present disclosure;
Fig.9 is a schematic view of a structure of an information transmission device according to another embodiment of the present disclosure;
Fig. 10 is a schematic view of a structure of an information transmission apparatus according to the embodiment of the present disclosure; and
Fig. 11 is a schematic view of the structure of an information transmission apparatus according to another embodiment of the present disclosure.

### DETAILED DESCRIPTION

The following will be combined with the drawings in the embodiments of the present disclosure to clearly and completely describe the technical solutions in the embodiments of the present disclosure. Obviously, the described embodiments are only part of the embodiments of the present disclosure, not all of the embodiments. Based on the embodiments in the present disclosure, all other embodiments obtained by ordinary technicians in this field without making creative work are within the scope of protection of the present disclosure.

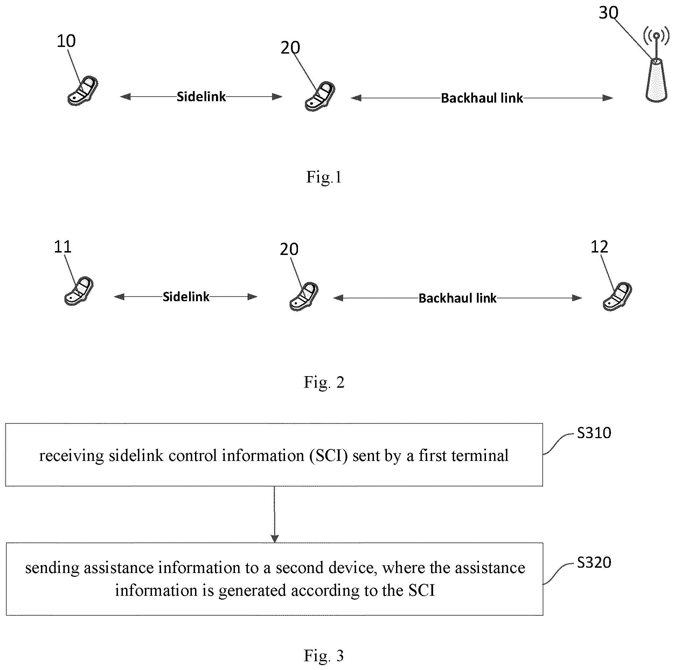

In Fig. 1, it is a schematic view of one embodiment of an application system using the information transmission method described in the embodiment of the present disclosure; in this embodiment, the system adopts U2N relay, including a remote terminal 10, a relay terminal 20 and a network side device 30, where a sidelink interface (also called a Sidelink interface or a PCS interface) is used between the remote terminal 10 and the relay terminal 20, and a Uu interface is used as the interface between the relay terminal 20 and the network side device 30. The link between the relay terminal 20 and the network side device 30 can be called a backhaul link for the remote terminal 10.

In Fig. 2, another embodiment of an application system using the information transmission method described in the embodiment of the present disclosure is schematically shown; in this embodiment, the system uses a user-to-user relay UE-to-UE relay (U2U relay for short), including a first remote terminal 11, a relay terminal 20, and a second remote terminal 12, where a sidelink interface (also called a Sidelink interface or a PCS interface) is used between the first remote terminal 11 and the relay terminal 20, and between the relay terminal 20 and the second remote terminal 12, and the link between the relay terminal 20 and the second remote terminal 12 can be called a backhaul link for the first remote terminal 11.

In the related art, when a remote terminal uses a relay to transmit data to its communication peer terminal, the relay terminal needs to request resources through the SR/BSR process after receiving the data sent by the remote terminal. Both the SR and BSR processes require at least 1 RTT duration, and if the retransmission of SR/BSR is considered, the required time is even longer, so the end-to-end delay requirement of delay-sensitive services cannot be met. To solve this technical problem, an embodiment of the present disclosure provides an information transmission method. After a first device receives an SCI sent by a first terminal (such as a remote terminal), the method sends assistance information generated according to the SCI to a second device, so that the second device can determine the time when the data arrives at the first device according to the assistance information, allocate the resources required for the data transmission in advance, assist the second device in reasonably allocating resources, and ensure that when the data transmitted by the first terminal arrives at the first device, there are resources available for data forwarding, thereby reducing the delay of relay forwarding and reducing the end-to-end transmission delay of the entire relay system.

In one embodiment of the present disclosure, as shown in Fig.3, an information transmission method is provided, which is performed by a first device. The method includes:
S310: receiving sidelink control information (SCI) sent by a first terminal;
S320: sending assistance information to a second device, where the assistance information is generated according to the SCI.

The first device is a relay device, and optionally, may be a terminal with a relay function, which is used to forward data sent by the first terminal to a network side device or a second terminal.

By adopting the information transmission method described in the embodiment of the present disclosure, after the first device receives the SCI sent by the first terminal, it can generate assistance information according to the SCI and send the assistance information to the second device, thereby ensuring that the second device can determine the time when the data arrives at the first device according to the indication in the assistance information, and allocate the resources required for data transmission to the first device in advance, thereby reducing the time required for the relay terminal to forward data and reducing the end-to-end transmission delay of the service.

Optionally, the assistance information is generated according to the SCI, and is used to assist the second device in performing resource configuration.

Optionally, the second device is one of the following:
a network device accessed by a first device through a Uu interface;
a device responsible for scheduling sidelink interface resources between the first device and a second terminal;
where the second terminal is a communication peer that performs a relay communication with the first terminal through the first device.

In the embodiment of the present disclosure, optionally, the method further includes:
after receiving the SCI sent by the first terminal, in a case that the SCI includes resource reservation information, generating the assistance information according to the SCI.

According to the embodiment, after the first device (such as a relay terminal) receives the SCI sent by the first terminal, if the SCI includes resource reservation information, the first terminal generates assistance information according to the SCI and sends the assistance information to the second device.

Optionally, the resource reservation information includes at least one of the following:
resource reservation information of initial transmission resources of sidelink interface;
resource reservation information of retransmission resources of sidelink interface.

Optionally, the resource reservation information indicates a time domain resource position, a frequency domain resource position, a modulation and coding scheme (MCS), etc. corresponding to the initial transmission resource and/or retransmission resource of the sidelink interface.

In the embodiment of the present disclosure, in step S310, the SCI received from the first terminal may be a first-stage SCI sent by the first terminal, or may be a second-stage SCI sent by the second terminal; specifically, after receiving the first-stage SCI sent by the first terminal or receiving the second-stage SCI sent by the first terminal, the first device sends assistance information to the second device.

Optionally, the first-stage SCI or the second-stage SCI includes resource reservation information, and after receiving the SCI including the resource reservation information, the assistance information is generated according to the SCI.

In the embodiment of the present disclosure, in step S320, when the assistance information is sent to the second device, the assistance information includes at least one of the following:
time domain resource indication information;
data size.

Optionally, the time domain resource indication information is determined according to resource reservation information carried by the SCI; the data size is determined according to the resource reservation information carried by the SCI and a modulation and coding scheme (MCS) carried by the SCI.

In one implementation manner, optionally, the time domain resource indication information is configured to indicate time domain resource information corresponding to initial transmission and/or retransmission.

Specifically, using the information transmission method described in the embodiment of the present disclosure, when assistance information is generated based on the SCI, the specific location of the time domain resources corresponding to the initial transmission and/or retransmission resources of the sidelink interface scheduled by the SCI is determined according to the resource reservation information in the SCI, and the specific location of the time domain resources is used as the time domain resource indication information.

Optionally, the time domain resource indication information indicating the time domain resource information corresponding to the retransmission includes: indicating a specific time domain resource corresponding to each retransmission.

In another implementation manner, optionally, one of the following methods is adopted, where the time domain resource indication information indicating the time domain resource information corresponding to the initial transmission:
indicating a starting position and a period of the time domain resource corresponding to the initial transmission;
indicating a starting position, a period and a number of repetitions of the time domain resource corresponding to the initial transmission; or
indicating a starting position, a period and a resource end time of the time domain resource corresponding to the initial transmission.

In the embodiment of the present disclosure, optionally, in step S320, when the first device sends the assistance information to the second device, the assistance information is sent through existing Uu interface RRC signaling, for example, the assistance information can be sent through terminal assistance information (UE AssistantInformation) or sidelink terminal information (SidelinkUEInformation); in another embodiment, optionally, the assistance information can be sent through specific Uu interface RRC signaling, such as introducing new Uu interface RRC signaling for sending the assistance information.

In the embodiment of the present disclosure, optionally, after sending the assistance information to the second device in step S320, the method further includes:
receiving a sidelink interface configuration resource sent by the second device according to the assistance information;
forwarding sidelink interface data sent by the first terminal, through the sidelink interface configuration resource.

Optionally, in a case that the second device is the network device accessed by the first device through the Uu interface, the sidelink interface configuration resource includes at least one of the following:
a first type of pre-configured grant for the Uu interface configured for the first device;
a second type of pre-configured grant for the Uu interface configured for the first device; or
a dynamically scheduled resource for the Uu interface configured for the first device.

Optionally, the information transmission method further includes:
forwarding, to the second device, the data which is sent by the first terminal through the sidelink interface, by pre-configuring grant information or dynamically scheduling resources for the Uu interface configured for the first devic.

In this implementation manner, when the second device is a network device accessed by the first device through a Uu interface, after receiving the assistance information, the second device performs at least one of the following operations:
configuring a type 1 configured grant (Configured Grant, CG) (i.e., a first type of pre-configured grant) for the first device at a Uu interface according to the assistance information;
configuring a type 2 configured grant (i.e., a second type of pre-configured grant) for the first device at a Uu interface according to the assistance information;
dynamically scheduling the first device according to the assistance information.

In another embodiment of the information transmission method of the present disclosure, when the second device is a device responsible for scheduling sidelink interface resources between the first device and the second terminal, the sidelink interface configuration resources include at least one of the following:
a first type of pre-configured grant configured for a sidelink interface between the first device and the second terminal;
a second type of pre-configured grant configured for a sidelink interface between the first device and the second terminal; or
a dynamically scheduled resource configured for a sidelink interface between the first device and the second terminal.

In this embodiment, optionally, the information transmission method further includes:
forwarding, to the second terminal, the data which is sent by the first terminal through the sidelink interface, through the sidelink interface configuration resource.

In this implementation manner, when the second device is a device responsible for scheduling sidelink interface resources between the first device and the second terminal, after receiving the assistance information, the second device performs at least one of the following operations:
according to the assistance information, configuring a type 1 CG (a first type of pre-configured grant) for a sidelink interface between the first device and the second terminal;
according to the assistance information, configuring a type 2 CG (a second type of pre-configured grant) for a sidelink interface between the first device and the second terminal;
dynamic scheduling the sidelink interface between the first device and the second terminal according to the assistance information.

In the embodiment of the present disclosure, optionally, the device responsible for scheduling the sidelink interface resources between the first device and the second terminal is the second terminal, or a third terminal different from the first terminal and the second terminal.

According to the embodiment, the second device is a device responsible for scheduling the sidelink interface resources between the first device and the second terminal, and when the second device is the second terminal or the third terminal, it forms a U2U relay, and the first device (that is, the relay terminal) sends assistance information generated according to the SCI to the second terminal or the third terminal, and the second terminal or the third terminal configures the sidelink interface configuration resources between the first device and the second terminal.

An example of the specific implementation of the information transmission method described in the embodiment of the present disclosure is described in conjunction with a specific embodiment.

### Embodiment 1

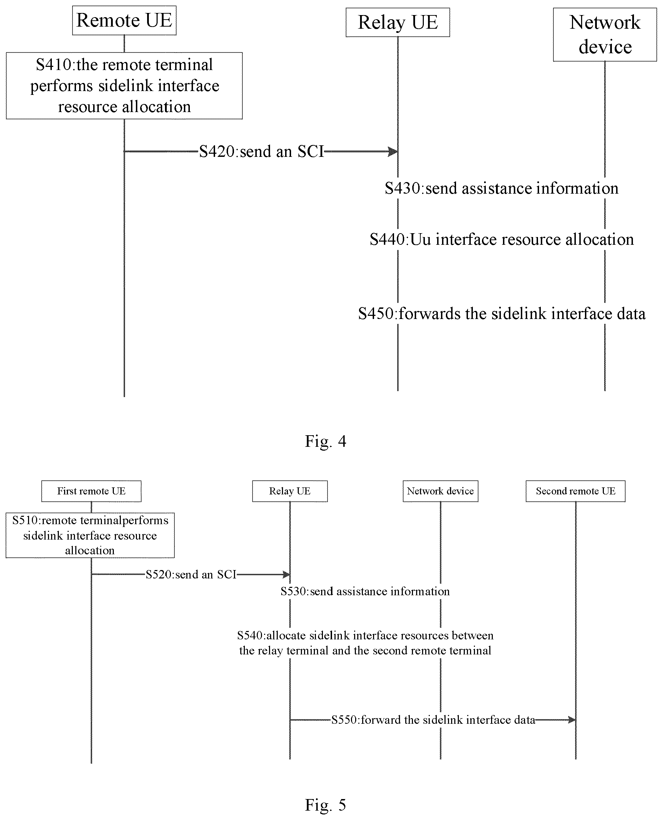

In this embodiment, taking the information transmission method applied to U2N relay as an example, in combination with Fig.4, the information transmission method in this embodiment includes the following steps:
S410, the remote terminal (that is, the first terminal) performs sidelink interface resource allocation;
   For L2 U2N relay, the remote terminal only supports resource allocation mode 2 (i.e., Mode 2) on the sidelink interface. Specifically, the remote terminal can directly select direct communication resources from the resource pool corresponding to the sidelink interface.
S420, the remote terminal sends an SCI to the relay terminal (i.e., the first device);
   Among them, in step S410, after the remote terminal performs the sidelink interface resource allocation, it can determine the content that needs to be filled in the SCI sent by the sidelink interface. Then, the remote terminal can send the SCI to the relay terminal. In the embodiment of the present disclosure, the SCI sent by the remote terminal to the relay terminal can include resource reservation information; optionally, the resource reservation information includes resource reservation information for initial transmission resources and/or resource reservation information for retransmission resources. The resource reservation information will indicate the specific time domain resource location, frequency domain resource location, MCS, etc. corresponding to the initial transmission and retransmission.
S430, the relay terminal sends assistance information to the network device (second device);
   In the embodiment of the present disclosure, the relay terminal sends assistance information to the network device to which the first device accesses through the Uu interface, that is, the second device is the network device to which the first device accesses through the Uu interface.

With this implementation, the relay terminal receives the SCI from the remote terminal. If the SCI includes resource reservation information, the relay terminal is triggered to send assistance information to the network device.

Optionally, the SCI received by the relay terminal from the remote terminal may be a second-stage SCI (2nd-stage S CI), that is, after the relay terminal receives the second-stage SCI from the remote terminal, if the previously received first-stage SCI and/or the currently received second-stage SCI contain resource reservation information, the relay terminal is triggered to send assistance information to the network device.

Optionally, the assistance information includes one or more of the following contents:
time domain resource indication information;
data size.

In the embodiment of the present disclosure, optionally, the time domain resource indication information may be embodied as one of the following:
The specific location of the time domain resources corresponding to the initial transmission and/or retransmission resources of the sidelink interface scheduled by the SCI is determined according to the resource reservation information in the SCI, and the specific location of the time domain resources is used as the time domain resource location information.

For example: the initial transmission times indicated by the resource reservation information in the SCI include T1, T4 and T5, and the retransmission times include T1, T2 and T3. In this implementation, the specific positions of the time domain resources indicated in the time domain resource indication information include T1, T2, T3, T4 and T5.

Specifically, the time domain resource indication information is configured to indicate the time domain resource information corresponding to the initial transmission and/or retransmission:
The time domain resource indication information indicates that the time domain resource information corresponding to the retransmission includes: indicating the specific time domain resource corresponding to each retransmission;
The time domain resource information corresponding to the initial transmission is indicated in one of the following ways:
indicating a starting position and a period of the time domain resource corresponding to the initial transmission;
indicating a starting position, a period and a number of repetitions of the time domain resource corresponding to the initial transmission; or
indicating a starting position, a period and a resource end time of the time domain resource corresponding to the initial transmission.

For example, the time domain resource information corresponding to the initial transmission may indicate the specific location T1 of the time domain resource, the period P1, and the number of repetitions is 5. The time domain resource information corresponding to the retransmission may indicate the specific retransmission times T2 and T3.

In the embodiment of the present disclosure, optionally, the data size in the assistance information is determined according to the resource reservation information carried by the SCI and the modulation and coding scheme (MCS) carried by the SCI.

S440, the network device performs Uu interface resource allocation;
After receiving the assistance information sent by the relay terminal, the network device sends the Uu interface scheduling signaling to the relay terminal. Specifically, at least one of the following scheduling methods may be adopted:
Method 1 : The network device configures type 1 CG (first type of pre-configured grant) for the relay terminal on the Uu interface according to the assistance information;
   This scheduling method is mainly applicable to the situation where the SCI only contains the initial transmission resource reservation information, or is applicable to the situation where the SCI contains both the initial transmission resource reservation information and the retransmission resource reservation information, and the time domain resource positions corresponding to the initial transmission and the retransmission are relatively regular (such as periodic occurrence), and the network equipment performs Type 1 CG configuration to ensure that after the relay terminal receives the sidelink interface data from the remote terminal, there are UL available resources on the Uu interface, thereby reducing the delay of the Uu interface UL transmission.
Mode 2: The network device configures type 2 CG (second type of pre-configured grant) for the relay terminal on the Uu interface according to the assistance information.
   As same as method 1, this scheduling method is mainly applicable to the situation where the SCI only contains initial transmission resource reservation information, or is applicable to the situation where the SCI contains both initial transmission resource reservation information and retransmission resource reservation information, and the time domain resource positions corresponding to the initial transmission and retransmission are relatively regular (such as periodic occurrence), and the network equipment performs Type 2 CG configuration to ensure that after the relay terminal receives the sidelink interface data from the remote terminal, there are UL available resources on the Uu interface, thereby reducing the delay of UL transmission on the Uu interface.
Method 3: the network device dynamically schedules the relay terminal according to the assistance information.

This scheduling method is universal. The base station only needs to ensure that after the relay terminal receives the sidelink interface data from the remote terminal, there are UL available resources on the Uu interface, thereby reducing th10e delay of the Uu interface UL transmission.

S450, The relay terminal forwards the sidelink interface data sent by the first terminal through the received allocated resources.

Specifically, after receiving the sidelink interface data from the remote terminal, the relay terminal forwards the received sidelink interface data to the network device using the Uu interface UL resources acquired in step S440.

By adopting this embodiment, after receiving the SCI sent by the remote terminal, the relay terminal can generate assistance information based on the resource reservation information in the SCI, and send the assistance information to the network device, so that the network device can allocate Uu interface resources based on the assistance information, and use the assistance information to assist the network device in determining the resources used by the relay terminal to forward data, thereby achieving the effect of reducing the delay in the relay terminal forwarding the data sent by the remote terminal.

### Embodiment 2

In this embodiment, taking the application of the information transmission method to U2U relay as an example, in combination with Fig.5, the information transmission method in this embodiment includes the following steps:
S510, a first remote terminal (i.e., a first terminal) performs sidelink interface resource allocation;
   For L2 U2Urelay, if the first remote terminal only supports resource allocation mode 2 (i.e., Mode 2) on the sidelink interface, the first remote terminal may directly select direct communication resources from an available resource pool of the sidelink interface.
S520, the first remote terminal sends an SCI to the relay terminal (i.e., the first device);
   In step S510, after the first remote terminal performs the resource allocation of the sidelink interface, it can determine the content that needs to be filled in the SCI sent by the sidelink interface. Then, the first remote terminal can send the SCI to the relay terminal. In the embodiment of the present disclosure, the SCI sent by the first remote terminal to the relay terminal can include resource reservation information; optionally, the resource reservation information includes resource reservation information for initial transmission resources and/or resource reservation information for retransmission resources. The resource reservation information will indicate the specific time domain resource location, frequency domain resource location, MCS, etc. corresponding to the initial transmission and retransmission.
S530, the relay terminal sends assistance information to the network device (second device);
   the present disclosure, if the relay terminal is online, the relay terminal receives the SCI sent by the first remote terminal, and if the SCI includes resource reservation information, the assistance information is sent to the target device (second device) responsible for scheduling the sidelink interface resources between the relay terminal and the second remote terminal (that is, the second terminal); in the embodiment of the present disclosure, optionally, the target device receiving the assistance information sent by the relay terminal is a network device that provides services to the relay terminal. The second remote terminal is a communication peer that performs relay communication with the first remote terminal through the relay terminal.

With this implementation, the relay terminal receives the SCI from the remote terminal. If the SCI includes resource reservation information, the relay terminal is triggered to send assistance information to the network device.

Optionally, the SCI received by the relay terminal from the remote terminal may be a second-stage SCI (2nd-stage S CI), that is, after the relay terminal receives the second-stage SCI from the remote terminal, if the previously received first-stage SCI and/or the currently received second-stage SCI contain resource reservation information, the relay terminal is triggered to send assistance information to the network device.

Optionally, the assistance information includes one or more of the following contents:
time domain resource indication information;
data size.

In the of the present disclosure, optionally, the time domain resource indication information may be embodied as one of the following:
The specific location of the time domain resources corresponding to the initial transmission and/or retransmission resources of the sidelink interface scheduled by the SCI is determined according to the resource reservation information in the SCI, and the specific location of the time domain resources is used as the time domain resource location information.

For example: the initial transmission times indicated by the resource reservation information in the SCI include T1, T4 and T5, and the retransmission times include T1, T2 and T3. In this implementation, the specific positions of the time domain resources indicated in the time domain resource indication information include T1, T2, T3, T4 and T5.

Specifically, the time domain resource indication information is configured to indicate the time domain resource information corresponding to the initial transmission and/or retransmission:
The time domain resource indication information indicates the time domain resource information corresponding to the retransmission, including: indicating the specific time domain resource corresponding to each retransmission;
The time domain resource information corresponding to the initial transmission is indicated in one of the following ways:
   indicating a starting position and a period of the time domain resource corresponding to the initial transmission;
   indicating a starting position, a period and a number of repetitions of the time domain resource corresponding to the initial transmission; or
   indicating a starting position, a period and a resource end time of the time domain resource corresponding to the initial transmission.

For example, the time domain resource information corresponding to the initial transmission may indicate the specific location T1 of the time domain resource, the period P1, and the number of repetitions is 5. The time domain resource information corresponding to the retransmission may indicate the specific retransmission times T2 and T3.
the present disclosure, optionally, the data size in the assistance information is determined according to the resource reservation information carried by the SCI and the modulation and coding scheme (MCS) carried by the SCI.
S540, allocating sidelink interface resources between the relay terminal and the second remote terminal;
After receiving the assistance information sent by the relay terminal, the network device sends a scheduling signaling for allocation of sidelink interface resources between the relay terminal and the second remote terminal to the relay terminal; specifically, at least one of the following scheduling methods may be adopted: Method 1 : According to the assistance information, the network device configures type 1 CG (pre-configured grant of the first type) for the sidelink interface between the relay terminal and the second remote terminal;
This scheduling method is mainly applicable to the situation where the SCI only contains initial transmission resource reservation information, or is applicable to the situation where the SCI contains both initial transmission resource reservation information and retransmission resource reservation information, and the time domain resource positions corresponding to the initial transmission and retransmission are relatively regular (such as periodic occurrence), and the network device performs Type 1 CG configuration to ensure that after the relay terminal receives the sidelink interface data from the first remote terminal, there are available resources on the sidelink interface between the relay terminal and the second remote terminal, thereby reducing the delay of the Uu interface UL transmission.

Mode 2: according to the assistance information, the network device configures a type 2 CG (a second type of pre-configured grant) for the sidelink interface between the relay terminal and the second remote terminal;
As same as method 1, this scheduling method is mainly applicable to the situation where the SCI only contains initial transmission resource reservation information, or is applicable to the situation where the SCI contains both initial transmission resource reservation information and retransmission resource reservation information, and the time domain resource positions corresponding to the initial transmission and retransmission are relatively regular (such as periodic occurrence), and the network equipment performs Type 2 CG configuration to ensure that after the relay terminal receives the sidelink interface data from the remote terminal, there are available resources on the sidelink interface between the relay terminal and the second remote terminal, thereby reducing the delay of the Uu interface UL transmission.

Mode 3: dynamically scheduling resources configured for the sidelink interface between the relay terminal and the second remote terminal according to the assistance information.

This scheduling method is universal. When the network device performs resource scheduling, it is necessary to ensure that after the relay terminal receives the sidelink interface data from the first remote terminal, there are available resources in the sidelink interface between the relay terminal and the second remote terminal, thereby reducing the delay of Uu interface UL transmission.

S550, the relay terminal forwards the sidelink interface data sent by the first remote terminal to the second remote terminal through the received allocated resources;
In this step, after the relay terminal receives the sidelink interface data from the first remote terminal, it forwards the received sidelink interface data to the second remote terminal according to the resources allocated in step S540. With this embodiment, after receiving the SCI sent by the first remote terminal, the relay terminal can generate assistance information according to the resource reservation information in the SCI, and send the assistance information to the target device (the second device) responsible for scheduling the sidelink interface resources between the relay terminal and the second remote terminal (that is, the second terminal), so that the second device allocates the sidelink interface resources between the relay terminal and the second remote terminal according to the assistance information, so as to assist the network device in determining the resources used by the relay terminal for forwarding data through the assistance information, thereby achieving the effect of reducing the delay of the relay terminal forwarding the data sent by the remote terminal.

### Embodiment 3

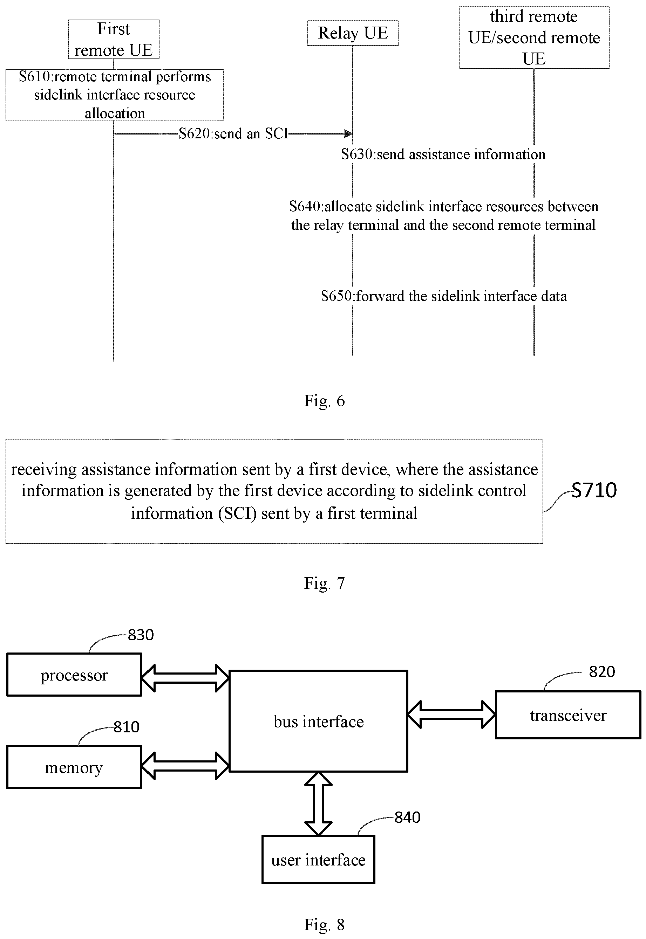

In this embodiment, taking the application of the information transmission method to U2U relay as an example, in combination with Fig.6, the information transmission method in this embodiment includes the following steps:
S610, a first remote terminal (i.e., a first terminal) performs sidelink interface resource allocation;
For L2 U2Urelay, if the first remote terminal only supports resource allocation mode 2 (i.e., Mode 2) on the sidelink interface, the first remote terminal may directly select direct communication resources from an available resource pool of the sidelink interface.

S620, the first remote terminal sends an SCI to the relay terminal (i.e., the first device);
In step S610, after the first remote terminal performs the resource allocation of the sidelink interface, it can determine the content that needs to be filled in the SCI sent by the sidelink interface. Then, the first remote terminal can send the SCI to the relay terminal. In the embodiment of the present disclosure, the SCI sent by the first remote terminal to the relay terminal may include resource reservation information; optionally, the resource reservation information includes resource reservation information for initial transmission resources and/or resource reservation information for retransmission resources. The resource reservation information will indicate the specific time domain resource location, frequency domain resource location, MCS, etc. corresponding to the initial transmission and retransmission.

S630, the relay terminal sends assistance information to the third remote terminal;
In the embodiment of the present disclosure, the relay terminal receives the SCI sent by the first remote terminal. If the SCI includes resource reservation information, the relay terminal sends assistance information to the target device. In the embodiment of the present disclosure, the target device receiving the assistance information is a device responsible for scheduling sidelink interface resources between the relay terminal and the second remote terminal (that is, the second terminal). Optionally, the device can be a third remote terminal, which is the same as or different from the second remote terminal. The second remote terminal is a communication peer that performs relay communication with the first remote terminal through the relay terminal.

According to this embodiment, the relay terminal receives the SCI from the remote terminal. If the SCI includes resource reservation information, the relay terminal is triggered to send assistance information to the network device.

Optionally, the SCI received by the relay terminal from the remote terminal may be a second-stage SCI (2nd-stage S CI), that is, after the relay terminal receives the second-stage SCI from the remote terminal, if the previously received first-stage SCI and/or the currently received second-stage SCI contain resource reservation information, the relay terminal is triggered to send assistance information to the network device.

Optionally, the assistance information includes one or more of the following contents:
time domain resource indication information;
data size.
of the present disclosure, optionally, the time domain resource indication information may be embodied as one of the following:
   The specific location of the time domain resources corresponding to the initial transmission and/or retransmission resources of the sidelink interface scheduled by the SCI is determined according to the resource reservation information in the SCI, and the specific location of the time domain resources is used as the time domain resource location information.

For example: the initial transmission times indicated by the resource reservation information in the SCI include T1, T4 and T5, and the retransmission times include T1, T2 and T3. In this implementation, the specific positions of the time domain resources indicated in the time domain resource indication information include T1, T2, T3, T4 and T5.

Specifically, the time domain resource indication information is configured to indicate the time domain resource information corresponding to the initial transmission and/or retransmission:
The time domain resource indication information indicates the time domain resource information corresponding to the retransmission, including indicating the specific time domain resource corresponding to each retransmission;
The time domain resource information corresponding to the initial transmission is indicated in one of the following ways:
   indicating a starting position and a period of the time domain resource corresponding to the initial transmission;
   indicating a starting position, a period and a number of repetitions of the time domain resource corresponding to the initial transmission; or
   indicating a starting position, a period and a resource end time of the time domain resource corresponding to the initial transmission.

For example, the time domain resource information corresponding to the initial transmission may indicate the specific location T1 of the time domain resource, the period P1, and the number of repetitions is 5. The time domain resource information corresponding to the retransmission may indicate the specific retransmission times T2 and T3.
the present disclosure, optionally, the data size in the assistance information is determined according to the resource reservation information carried by the SCI and the modulation and coding scheme (MCS) carried by the SCI.
S640, allocating sidelink interface resources between the relay terminal and the second remote terminal;
After receiving the assistance information sent by the relay terminal, the third remote terminal sends a scheduling signaling for allocation of sidelink interface resources between the relay terminal and the second remote terminal to the relay terminal; specifically, at least one of the following scheduling methods can be adopted: Method 1 : According to the assistance information, the third remote terminal configures type 1 CG (pre-configured grant of the first type) for the sidelink interface between the relay terminal and the second remote terminal;
this scheduling method is mainly applicable to the situation where the SCI only contains initial transmission resource reservation information, or is applicable to the situation where the SCI contains both initial transmission resource reservation information and retransmission resource reservation information, and the time domain resource positions corresponding to the initial transmission and retransmission are relatively regular (such as periodic occurrence), and the network device performs Type 1 CG configuration to ensure that after the relay terminal receives the sidelink interface data from the first remote terminal, there are available resources on the sidelink interface between the relay terminal and the second remote terminal, thereby reducing the delay of the Uu interface UL transmission.

Mode 2: According to the assistance information, the third remote terminal configures a type 2 CG (a second type of pre-configured grant) for the sidelink interface between the relay terminal and the second remote terminal.

As same as method 1, this scheduling method is mainly applicable to the situation where the SCI only contains initial transmission resource reservation information, or is applicable to the situation where the SCI contains both initial transmission resource reservation information and retransmission resource reservation information, and the time domain resource positions corresponding to the initial transmission and retransmission are relatively regular (such as periodic occurrence), and the third remote terminal performs Type 2 CG configuration to ensure that after the relay terminal receives the sidelink interface data from the remote terminal, there are available resources on the sidelink interface between the relay terminal and the second remote terminal, thereby reducing the delay of the Uu interface UL transmission.

Mode 3: dynamically scheduling resources configured for the sidelink interface between the relay terminal and the second remote terminal according to the assistance information.

This scheduling method is universal. When the third remote terminal performs resource scheduling, it is necessary to ensure that after the relay terminal receives the sidelink interface data from the first remote terminal, there are available resources in the sidelink interface between the relay terminal and the second remote terminal, thereby reducing the delay of Uu interface UL transmission.

S650, the relay terminal forwards the sidelink interface data sent by the first remote terminal to the second remote terminal through the received allocated resources;
In this step, after the relay terminal receives the sidelink interface data from the first remote terminal, it forwards the received sidelink interface data to the second remote terminal according to the resources allocated in step S640; in the embodiment of the present disclosure, the third remote terminal and the second remote terminal are the same terminal, and according to the resources allocated in step S640, the relay terminal forwards the received sidelink interface data to the third remote terminal.

According to the embodiment of the present disclosure, after receiving the SCI sent by the first remote terminal, the relay terminal can generate assistance information according to the resource reservation information in the SCI, and send the assistance information to the third remote device (the second device) responsible for scheduling the sidelink interface resources between the relay terminal and the second remote terminal (that is, the second terminal), so that the third remote device allocates the sidelink interface resources between the relay terminal and the second remote terminal according to the assistance information, so as to assist the network device in determining the resources used by the relay terminal for forwarding data through the assistance information, thereby achieving the effect of reducing the delay of the relay terminal forwarding the data sent by the remote terminal.

The embodiment of the present disclosure further provides an information transmission method, which is performed by a second device. As shown in Fig.7, the method includes:
S710, receiving assistance information sent by a first device, where the assistance information is generated by the first device according to sidelink control information (SCI) sent by a first terminal.

According to the information transmission method described in this embodiment, after the first device receives the SCI sent by the first terminal (such as a remote terminal), the assistance information generated according to the SCI is sent to the second device to assist the second device in reasonably allocating resources, so as to ensure that there are resources available for data forwarding when the data of the first terminal reaches the first device, thereby reducing the end-to-end transmission delay of the entire relay system by reducing the delay of relay forwarding.

Optionally, the second device is one of the following:
a network device accessed by a first device through a Uu interface;
a device responsible for scheduling sidelink interface resources between the first device and a second terminal;
where the second terminal is a communication peer that performs a relay communication with the first terminal through the first device.

Optionally, the assistance information includes at least one of the following:
time domain resource indication information;
data size.

Optionally, the time domain resource indication information is determined according to the resource reservation information carried by the SCI.

Optionally, the data size is determined according to the resource reservation information carried by the SCI and a modulation and coding scheme (MCS) carried by the SCI.

Optionally, the time domain resource indication information is configured to indicate time domain resource information corresponding to an initial transmission and/or a retransmission.

Optionally, the time domain resource indication information indicating the time domain resource information corresponding to the retransmission includes: indicating specific time domain resource corresponding to each retransmission.

Optionally, the time domain resource indication information indicating the time domain resource information corresponding to the initial transmission includes one of the following:
indicating a starting position and a period of the time domain resource corresponding to the initial transmission;
indicating a starting position, a period and a number of repetitions of the time domain resource corresponding to the initial transmission; or
indicating a starting position, a period and a resource end time of the time domain resource corresponding to the initial transmission.

Optionally, the information transmission method further includes:
determining, according to the assistance information, a sidelink interface configuration resource of the first device;
sending the sidelink interface configuration resource to the first device.

Optionally, in a case that the second device is the network device accessed by the first device through the Uu interface, the sidelink interface configuration resource includes at least one of the following:
a first type of pre-configured grant for the Uu interface configured for the first device;
a second type of pre-configured grant for the Uu interface configured for the first device; or
a dynamically scheduled resource for the Uu interface configured for the first device;
a time domain position of the resource indicated in the pre-configured grant or the dynamically scheduled resource matches a time domain position of the resource indicated in the assistance information.

Optionally, in a case that the second device is a device responsible for scheduling sidelink interface resources between the first device and the second terminal, the sidelink interface configuration resources include at least one of the following:
a first type of pre-configured grant configured for a sidelink interface between the first device and the second terminal; where the second terminal is a communication peer that performs a relay communication with the first terminal through the first device;
a second type of pre-configured grant configured for a sidelink interface between the first device and the second terminal;
a dynamically scheduled resource configured for a sidelink interface between the first device and the second terminal.

The embodiment of the present disclosure further provides an information transmission device, which is a first device, as shown in Fig.8, including a memory 810, a transceiver 820, and a processor 830:

The memory 810 is used to store a computer program; the transceiver 820 is used to send and receive data under the control of the processor 830; the processor 830 is used to read the computer program in the memory and perform the following operations:
receiving sidelink control information (SCI) sent by a first terminal;
sending assistance information to a second device, where the assistance information is generated according to the SCI.

Optionally, the processor 830 is further configured to perform:
after receiving the SCI sent by the first terminal, in a case that the SCI includes resource reservation information, generating the assistance information according to the SCI.

Optionally, the resource reservation information includes at least one of the following:
resource reservation information of initial transmission resources of sidelink interface;
resource reservation information of retransmission resources of sidelink interface.

Optionally, the second device is one of the following:
a network device accessed by a first device through a Uu interface;
a device responsible for scheduling sidelink interface resources between the first device and a second terminal;
where the second terminal is a communication peer that performs a relay communication with the first terminal through the first device.

Optionally, the assistance information includes at least one of the following:
time domain resource indication information;
data size.

Optionally, the time domain resource indication information is determined according to the resource reservation information carried by the SCI.

Optionally, the data size is determined according to resource reservation information carried by the SCI and a modulation and coding scheme (MCS) carried by the SCI.

Optionally, the time domain resource indication information is configured to indicate time domain resource information corresponding to an initial transmission and/or a retransmission.

Optionally, the time domain resource indication information indicating the time domain resource information corresponding to the retransmission includes:
indicating a specific time domain resource corresponding to each retransmission.

Optionally, the time domain resource indication information indicating the time domain resource information corresponding to the initial transmission includes one of the following:
indicating a starting position and a period of the time domain resource corresponding to the initial transmission;
indicating a starting position, a period and a number of repetitions of the time domain resource corresponding to the initial transmission; or
indicating a starting position, a period and a resource end time of the time domain resource corresponding to the initial transmission.

Optionally, the SCI is a first-stage SCI or a second-stage SCI.

Optionally, the processor 830 is further configured to perform:
receiving a sidelink interface configuration resource sent by the second device according to the assistance information;
forwarding sidelink interface data sent by the first terminal, through the sidelink interface configuration resource.

Optionally, in a case that the second device is the network device accessed by the first device through the Uu interface, the sidelink interface configuration resource includes at least one of the following:
a first type of pre-configured grant for the Uu interface configured for the first device;
a second type of pre-configured grant for the Uu interface configured for the first device; or
a dynamically scheduled resource for the Uu interface configured for the first device.

Optionally, the processor 830 is further configured to perform:
forwarding, to the second device, the data which is sent by the first terminal through the sidelink interface, by pre-configuring grant information or dynamically scheduling resources for the Uu interface configured for the first device.

Optionally, in a case that the second device is the device responsible for scheduling the sidelink interface resources between the first device and the second terminal, the sidelink interface configuration resources include at least one of the following:
a first type of pre-configured grant configured for a sidelink interface between the first device and the second terminal;
a second type of pre-configured grant configured for a sidelink interface between the first device and the second terminal; or
a dynamically scheduled resource configured for a sidelink interface between the first device and the second terminal.

Optionally, the data which is sent by the first terminal through the sidelink interface is forwarded to the second terminal, through the sidelink interface configuration resource.

Optionally, the device responsible for scheduling the sidelink interface resources between the first device and the second terminal is the second terminal, or a third terminal different from the first terminal and the second terminal.

In one implementation manner, optionally, the information transmission device is a relay terminal.

In Fig. 8, the bus architecture may include any number of interconnected buses and bridges, specifically one or more processors represented by processor 830 and various circuits of memory represented by memory 810 are linked together. The bus architecture can also link various other circuits such as peripherals, regulators, and power management circuits together, which are all well known in the art, so they are not further described herein. The bus interface provides an interface. The transceiver 820 can be a plurality of components, that is, including a transmitter and a receiver, providing a unit for communicating with various other devices on a transmission medium, and these transmission media include, these transmission media include wireless channels, wired channels, optical cables and other transmission media. For different user devices, the user interface 840 can also be an interface that can be connected to the required devices externally and internally, and the connected devices include but are not limited to a keypad, a display, a speaker, a microphone, a joystick, etc.

The processor 830 is responsible for managing the bus architecture and general processing, and the memory 810 can store data used by the processor 600 when performing operations.

Optionally, the processor 830 may be a central processing unit (CPU), an application specific integrated circuit (ASIC), a field programmable gate array (FPGA) or a complex programmable logic device (CPLD), and the processor may also adopt a multi-core architecture.

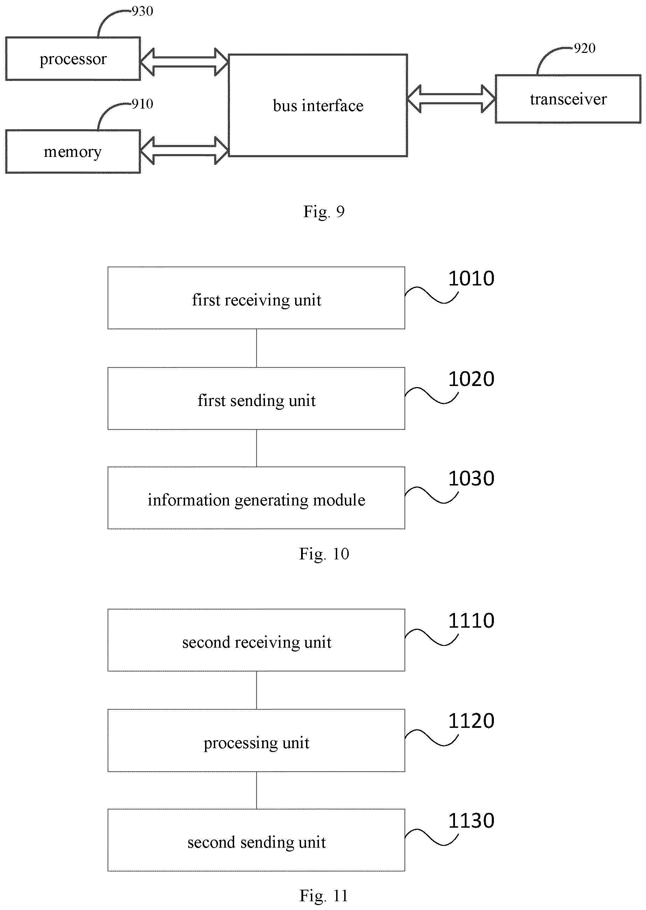

The embodiment of the present disclosure further provides an information transmission device, which is a second device, as shown in Fig.9, including a memory 910, a transceiver 920, and a processor 930:
the memory 910 is used to store computer programs; the transceiver 920 is used to send and receive data under the control of the processor 930; the processor 930 is used to read the computer program in the memory 910 and perform the following operations:
receiving assistance information sent by a first device, where the assistance information is generated by the first device according to sidelink control information (SCI) sent by a first terminal.

Optionally, the second device is one of the following:
a network device accessed by a first device through a Uu interface;
a device responsible for scheduling sidelink interface resources between the first device and a second terminal;
where the second terminal is a communication peer that performs a relay communication with the first terminal through the first device.

Optionally, the assistance information includes at least one of the following:
time domain resource indication information;
data size.

Optionally, the time domain resource indication information is determined according to the resource reservation information carried by the SCI.

Optionally, the data size is determined according to the resource reservation information carried by the SCI and a modulation and coding scheme (MCS) carried by the SCI.

Optionally, the time domain resource indication information is configured to indicate time domain resource information corresponding to an initial transmission and/or a retransmission.

Optionally, the time domain resource indication information indicating the time domain resource information corresponding to the retransmission includes:
indicating specific time domain resource corresponding to each retransmission.

Optionally, the time domain resource indication information indicating the time domain resource information corresponding to the initial transmission includes one of the following:
indicating a starting position and a period of the time domain resource corresponding to the initial transmission;
indicating a starting position, a period and a number of repetitions of the time domain resource corresponding to the initial transmission; or
indicating a starting position, a period and a resource end time of the time domain resource corresponding to the initial transmission.

Optionally, the processor 930 is further configured to perform:
determining, according to the assistance information, a sidelink interface configuration resource of the first device;
sending the sidelink interface configuration resource to the first device.

Optionally, in a case that the second device is the network device accessed by the first device through the Uu interface, the sidelink interface configuration resource includes at least one of the following:
a first type of pre-configured grant for the Uu interface configured for the first device;
a second type of pre-configured grant for the Uu interface configured for the first device; or
a dynamically scheduled resource for the Uu interface configured for the first device;
a time domain position of the resource indicated in the pre-configured grant or the dynamically scheduled resource matches a time domain position of the resource indicated in the assistance information.

Optionally, in a case that the second device is a device responsible for scheduling sidelink interface resources between the first device and the second terminal, the sidelink interface configuration resources include at least one of the following:
a first type of pre-configured grant configured for a sidelink interface between the first device and the second terminal; where the second terminal is a communication peer that performs a relay communication with the first terminal through the first device;
a second type of pre-configured grant configured for a sidelink interface between the first device and the second terminal;
a dynamically scheduled resource configured for a sidelink interface between the first device and the second terminal.

In one implementation manner, optionally, the information transmission device is a network device or a terminal.

Taking the information transmission device as a network side device as an example, in Fig.9, the bus architecture may include any number of interconnected buses and bridges, specifically one or more processors represented by the processor 930 and various circuits of the memory represented by the memory 910 are linked together. The bus architecture may also link together various other circuits such as peripheral devices, voltage regulators, and power management circuits, which are well known in the art and are therefore not further described herein. The bus interface provides an interface. The transceiver 920 may be a plurality of components, namely, a transmitter and a receiver, providing a unit for communicating with various other devices on a transmission medium, which transmission media include transmission media such as wireless channels, wired channels, and optical cables. The processor 930 is responsible for managing the bus architecture and general processing, and the memory 910 may store data used by the processor 930 when performing operations.

The processor 930 may be a central processing unit (CPU), an application specific integrated circuit (ASIC), a field programmable gate array (FPGA) or a complex programmable logic device (CPLD). The processor may also adopt a multi-core architecture.

The present disclosure also provides an information transmission device, which is applied to a first device. As shown in Fig. 10, the information transmission device includes:
a first receiving unit 1010, configured to receive sidelink control information (SCI) sent by a first terminal;;
a first sending unit 1020, configured to send assistance information to a second device, where the assistance information is generated according to the SCI.

Optionally, the information transmission apparatus further includes:
an information generating module 1030, configured to: after receiving the SCI sent by the first terminal, in a case that the SCI includes resource reservation information, generate the assistance information according to the SCI.

Optionally, the resource reservation information includes at least one of the following:
resource reservation information of initial transmission resources of sidelink interface;
resource reservation information of retransmission resources of sidelink interface.

Optionally, the second device is one of the following:
a network device accessed by a first device through a Uu interface;
a device responsible for scheduling sidelink interface resources between the first device and a second terminal;
where the second terminal is a communication peer that performs a relay communication with the first terminal through the first device.

Optionally, the assistance information includes at least one of the following:
time domain resource indication information;
data size.

Optionally, the time domain resource indication information is determined according to the resource reservation information carried by the SCI.

Optionally, the data size is determined according to the resource reservation information carried by the SCI and a modulation and coding scheme (MCS) carried by the SCI.

Optionally, the time domain resource indication information is configured to indicate time domain resource information corresponding to an initial transmission and/or a retransmission.

Optionally, the time domain resource indication information indicating the time domain resource information corresponding to the retransmission includes: indicating a specific time domain resource corresponding to each retransmission.

Optionally, the time domain resource indication information indicating the time domain resource information corresponding to the initial transmission includes one of the following:
indicating a starting position and a period of the time domain resource corresponding to the initial transmission;
indicating a starting position, a period and a number of repetitions of the time domain resource corresponding to the initial transmission; or
indicating a starting position, a period and a resource end time of the time domain resource corresponding to the initial transmission.

Optionally, the SCI is a first-stage SCI or a second-stage SCI.

Optionally, the first receiving unit 1010 is further configured to receive a sidelink interface configuration resource sent by the second device according to the assistance information;
the first sending unit 1020 is further configured to forward sidelink interface data sent by the first terminal, through the sidelink interface configuration resource.

Optionally, in a case that the second device is the network device accessed by the first device through the Uu interface, the sidelink interface configuration resource includes at least one of the following:
a first type of pre-configured grant for the Uu interface configured for the first device;
a second type of pre-configured grant for the Uu interface configured for the first device; or
a dynamically scheduled resource for the Uu interface configured for the first device.

Optionally, the first sending unit 1020 is further configured to:
forward, to the second device, the data which is sent by the first terminal through the sidelink interface, by pre-configuring grant information or dynamically scheduling resources for the Uu interface configured for the first device.

Optionally, in a case that the second device is the device responsible for scheduling the sidelink interface resources between the first device and the second terminal, the sidelink interface configuration resources include at least one of the following:
a first type of pre-configured grant configured for a sidelink interface between the first device and the second terminal;
a second type of pre-configured grant configured for a sidelink interface between the first device and the second terminal; or
a dynamically scheduled resource configured for a sidelink interface between the first device and the second terminal.

Optionally, the first sending unit 1020 forwards, to the second terminal, the data which is sent by the first terminal through the sidelink interface, through the sidelink interface configuration resource.

Optionally, the device responsible for scheduling the sidelink interface resources between the first device and the second terminal is the second terminal, or a third terminal different from the first terminal and the second terminal.

The present disclosure also provides an information transmission device, which is applied to a second device. As shown in Fig. 11, the device includes:
a second receiving unit 1110, configured to receive assistance information sent by a first device, where the assistance information is generated by the first device according to sidelink control information (SCI) sent by a first terminal.

Optionally, the second device is one of the following:
a network device accessed by a first device through a Uu interface;
a device responsible for scheduling sidelink interface resources between the first device and a second terminal;
where the second terminal is a communication peer that performs a relay communication with the first terminal through the first device.

Optionally, the assistance information includes at least one of the following:
time domain resource indication information;
data size.

Optionally, the time domain resource indication information is determined according to the resource reservation information carried by the SCI.

Optionally, the data size is determined according to the resource reservation information carried by the SCI and a modulation and coding scheme (MCS) carried by the SCI.

Optionally, the time domain resource indication information is configured to indicate time domain resource information corresponding to an initial transmission and/or a retransmission.

Optionally, the time domain resource indication information indicating the time domain resource information corresponding to the retransmission includes: indicating specific time domain resource corresponding to each retransmission.

Optionally, the time domain resource indication information indicating the time domain resource information corresponding to the initial transmission includes one of the following:
indicating a starting position and a period of the time domain resource corresponding to the initial transmission;
indicating a starting position, a period and a number of repetitions of the time domain resource corresponding to the initial transmission; or
indicating a starting position, a period and a resource end time of the time domain resource corresponding to the initial transmission.

Optionally, the device further includes:
a processing unit 1120, configured to determine, according to the assistance information, a sidelink interface configuration resource of the first device;
a second sending unit 1130, configured to send the sidelink interface configuration resource to the first device.

Optionally, in a case that the second device is the network device accessed by the first device through the Uu interface, the sidelink interface configuration resource includes at least one of the following:
a first type of pre-configured grant for the Uu interface configured for the first device;
a second type of pre-configured grant for the Uu interface configured for the first device; or
a dynamically scheduled resource for the Uu interface configured for the first device;
a time domain position of the resource indicated in the pre-configured grant or the dynamically scheduled resource matches a time domain position of the resource indicated in the assistance information.

Optionally, in a case that the second device is a device responsible for scheduling sidelink interface resources between the first device and the second terminal, the sidelink interface configuration resources include at least one of the following:
a first type of pre-configured grant configured for a sidelink interface between the first device and the second terminal; where the second terminal is a communication peer that performs a relay communication with the first terminal through the first device;
a second type of pre-configured grant configured for a sidelink interface between the first device and the second terminal;
a dynamically scheduled resource configured for a sidelink interface between the first device and the second terminal.

In addition, the division of units in the embodiments of the present disclosure is schematic and is only a logical function division. There may be other division methods in actual implementation. In addition, each functional unit in each embodiment of the present disclosure may be integrated into a processing unit, or each unit may exist physically separately, or two or more units may be integrated into one unit. The above-mentioned integrated unit may be implemented in the form of hardware or in the form of software functional units.

If the integrated unit is implemented in the form of a software functional unit and sold or used as an independent product, it can be stored in a processor-readable storage medium. Based on this understanding, the technical solution of the present disclosure is essentially or the part that contributes to the relevant technology or all or part of the technical solution can be embodied in the form of a software product. The computer software product is stored in a storage medium, including several instructions to enable a computer device (which can be a personal computer, server, or network device, etc.) or a processor to perform all or part of the steps of the method described in each embodiment of the present disclosure. The aforementioned storage medium includes: U disk, mobile hard disk, read-only memory (ROM), random access memory (RAM), disk or optical disk, etc. Various media that can store program codes.

It should be noted here that the above-mentioned device provided in the embodiment of the present disclosure can implement all the method steps implemented in the above-mentioned method embodiment, and can achieve the same technical effect. The parts and beneficial effects of this embodiment that are the same as those in the method embodiment will not be described in detail here.

An embodiment of the present disclosure further provides a processor-readable storage medium, where the processor-readable storage medium stores a computer program, and the computer program is used to enable the processor to execute any of the above information transmission methods.

The processor-readable storage medium may be any available medium or data storage device that can be accessed by the processor, including but not limited to magnetic storage (e.g., floppy disk, hard disk, magnetic tape, magneto-optical disk (MO), etc.), optical storage (e.g., compact disc (CD), digital video disc (DVD), Blu-ray Disc (BD), high-definition versatile disc (HVD), etc.), and semiconductor storage (e.g., read-only memory (ROM), electrical programmable read only memory (EPROM), electrically erasable programmable read-only memory (EEPROM), non-volatile memory (NAND FLASH, solid state drive (SSD)), etc.

It should be understood by those skilled in the art that the embodiments of the present disclosure may be provided as methods, systems, or computer program products. Therefore, the present disclosure may take the form of a complete hardware embodiment, a complete software embodiment, or an embodiment combining software and hardware. Moreover, the present disclosure may take the form of a computer program product implemented on one or more computer-usable storage media (including but not limited to disk storage and optical storage, etc.) containing computer-usable program codes.

The present disclosure is described with reference to the flowcharts and/or block diagrams of the methods, devices (systems), and computer program products according to the embodiments of the present disclosure. It should be understood that each process and/or box in the flowchart and/or block diagram, as well as the combination of the processes and/or boxes in the flowchart and/or block diagram, can be implemented by computer executable instructions. These computer executable instructions can be provided to a processor of a general-purpose computer, a special-purpose computer, an embedded processor, or other programmable data processing device to produce a machine, so that the instructions executed by the processor of the computer or other programmable data processing device produce a device for implementing the functions specified in one process or multiple processes in the flowchart and/or one box or multiple boxes in the block diagram.

These processor-executable instructions may also be stored in a processor-readable memory that can direct a computer or other programmable data processing device to operate in a specific manner, so that the instructions stored in the processor-readable memory produce a product including an instruction device that implements the functions specified in one or more processes in the flowchart and/or one or more boxes in the block diagram.

These processor-executable instructions may also be loaded onto a computer or other programmable data processing device so that a series of operational steps are executed on the computer or other programmable device to produce a computer-implemented process, whereby the instructions executed on the computer or other programmable device provide steps for implementing the functions specified in one or more flows in the flowchart and/or one or more blocks in the block diagram.

It should be noted that it should be understood that the division of the above modules is only a division of logical functions. In actual implementation, they can be fully or partially integrated into one physical entity, or they can be physically separated. And these modules can all be implemented in the form of software called by processing elements; they can also be all implemented in the form of hardware; some modules can also be implemented in the form of software called by processing elements, and some modules can be implemented in the form of hardware. For example, the determination module can be a separately established processing element, or it can be integrated in a chip of the above-mentioned device. In addition, it can also be stored in the memory of the above-mentioned device in the form of program code, and called and executed by a processing element of the above-mentioned device. The implementation of other modules is similar. In addition, these modules can be fully or partially integrated together, or they can be implemented independently. The processing element described here can be an integrated circuit with signal processing capabilities. In the implementation process, each step of the above method or each module above can be completed by an integrated logic circuit of hardware in the processor element or instructions in the form of software.

For example, each module, unit, sub-unit or sub-module may be one or more integrated circuits configured to implement the above method, such as one or more application specific integrated circuits (ASIC), or one or more microprocessors (digital signal processor, DSP), or one or more field programmable gate arrays (FPGA). For another example, when a module above is implemented in the form of a processing element scheduling program code, the processing element may be a general-purpose processor, such as a central processing unit (CPU) or other processor that can call program code. For another example, these modules can be integrated together and implemented in the form of a system-on-a-chip (SOC).

The term "first" and "second" in the present disclosure are used to distinguish similar objects, and are not necessarily used to describe a specific order or sequence. It should be understood that the data used in this way can be interchanged where appropriate, so that the embodiments of the present disclosure described here, such as those illustrated or described here, are implemented in a sequence other than the order. In addition, the terms "including" and "having" and any of their variations are intended to cover non -exclusive inclusions, for example, a process, method, system, product or device that includes a series of steps or units is not necessarily limited to those steps or units clearly listed, but may include other steps or units that are not clearly listed or inherent to these processes, methods, products or devices. In addition, the use of "and/or" in the specification and claims represents at least one of the connected objects, such as A and/or B and/or C, indicating the inclusion of single A, single B, single C, and A and B are present, B and C are present, A and C are present, and A, B and C are present in 7 situations. Similarly, the use of "at least one of A and B" in the specification and claims should be understood as "single A, single B, or A and B are present".

Obviously, those skilled in the art can make various changes and modifications to the present disclosure without departing from the spirit and scope of the present disclosure. Thus, if these modifications and variations of the present disclosure fall within the scope of the claims of the present disclosure and their equivalents, the present disclosure is also intended to include these modifications and variations.

## Claims

1. An information transmission method, performed by a first device, comprising:
receiving sidelink control information (SCI) sent by a first terminal;
sending assistance information to a second device, wherein the assistance information is generated according to the SCI.

2. The information transmission method according to claim 1, further comprising: after receiving the SCI sent by the first terminal, in a case that the SCI comprises resource reservation information, generating the assistance information according to the SCI.

3. The information transmission method according to claim 2, wherein the resource reservation information comprises at least one of the following:
resource reservation information of initial transmission resources of sidelink interface;
resource reservation information of retransmission resources of sidelink interface.

4. The information transmission method according to claim 1, wherein the second device is one of the following:
a network device accessed by a first device through a Uu interface;
a device responsible for scheduling sidelink interface resources between the first device and a second terminal;
wherein the second terminal is a communication peer that performs a relay communication with the first terminal through the first device.

5. The information transmission method according to claim 1, wherein the assistance information comprises at least one of the following:
time domain resource indication information;
data size.

6. The information transmission method according to claim 5, wherein the time domain resource indication information is determined according to the resource reservation information carried by the SCI.

7. The information transmission method according to claim 5, wherein the data size is determined according to the resource reservation information carried by the SCI and a modulation and coding scheme (MCS) carried by the SCI.

8. The information transmission method according to claim 5, wherein the time domain resource indication information is configured to indicate time domain resource information corresponding to an initial transmission and/or a retransmission.

9. The information transmission method according to claim 8, wherein the time domain resource indication information indicating the time domain resource information corresponding to the retransmission comprises: indicating a specific time domain resource corresponding to each retransmission.

10. The information transmission method according to claim 8, wherein the time domain resource indication information indicating the time domain resource information corresponding to the initial transmission comprises one of the following:
indicating a starting position and a period of the time domain resource corresponding to the initial transmission;
indicating a starting position, a period and a number of repetitions of the time domain resource corresponding to the initial transmission; or
indicating a starting position, a period and a resource end time of the time domain resource corresponding to the initial transmission.

11. The information transmission method according to claim 1, wherein the SCI is a first-stage SCI or a second-stage SCI.

12. The information transmission method according to claim 1, further comprising:
receiving a sidelink interface configuration resource sent by the second device according to the assistance information;
forwarding sidelink interface data sent by the first terminal, through the sidelink interface configuration resource.

13. The information transmission method according to claim 12, wherein in a case that the second device is the network device accessed by the first device through the Uu interface, the sidelink interface configuration resource comprises at least one of the following:
a first type of pre-configured grant for the Uu interface configured for the first device;
a second type of pre-configured grant for the Uu interface configured for the first device; or
a dynamically scheduled resource for the Uu interface configured for the first device.

14. The information transmission method according to claim 13, further comprising:
forwarding, to the second device, the data which is sent by the first terminal through the sidelink interface, by pre-configuring grant information or dynamically scheduling resources for the Uu interface configured for the first device.

15. The information transmission method according to claim 12, wherein in a case that the second device is the device responsible for scheduling the sidelink interface resources between the first device and the second terminal, the sidelink interface configuration resources comprise at least one of the following:
a first type of pre-configured grant configured for a sidelink interface between the first device and the second terminal;
a second type of pre-configured grant configured for a sidelink interface between the first device and the second terminal; or
a dynamically scheduled resource configured for a sidelink interface between the first device and the second terminal.

16. The information transmission method according to claim 15, further comprising:
forwarding, to the second terminal, the data which is sent by the first terminal through the sidelink interface, through the sidelink interface configuration resource.

17. The information transmission method according to claim 4 or 15, wherein the device responsible for scheduling the sidelink interface resources between the first device and the second terminal is the second terminal, or a third terminal different from the first terminal and the second terminal.

18. An information transmission method, performed by a second device, comprising:
receiving assistance information sent by a first device, wherein the assistance information is generated by the first device according to sidelink control information (SCI) sent by a first terminal.

19. The information transmission method according to claim 18, wherein the second device is one of the following:
a network device accessed by a first device through a Uu interface;
a device responsible for scheduling sidelink interface resources between the first device and a second terminal;
wherein the second terminal is a communication peer that performs a relay communication with the first terminal through the first device.

20. The information transmission method according to claim 18, wherein the assistance information comprises at least one of the following:
time domain resource indication information;
data size.

21. The information transmission method according to claim 20, wherein the time domain resource indication information is determined according to the resource reservation information carried by the SCI.

22. The information transmission method according to claim 20, wherein the data size is determined according to the resource reservation information carried by the SCI and a modulation and coding scheme (MCS) carried by the SCI.

23. The information transmission method according to claim 20, wherein the time domain resource indication information is configured to indicate time domain resource information corresponding to an initial transmission and/or a retransmission.

24. The information transmission method according to claim 23, wherein the time domain resource indication information indicating the time domain resource information corresponding to the retransmission comprises: indicating specific time domain resource corresponding to each retransmission.

25. The information transmission method according to claim 23, wherein the time domain resource indication information indicating the time domain resource information corresponding to the initial transmission comprises one of the following:
indicating a starting position and a period of the time domain resource corresponding to the initial transmission;
indicating a starting position, a period and a number of repetitions of the time domain resource corresponding to the initial transmission; or
indicating a starting position, a period and a resource end time of the time domain resource corresponding to the initial transmission.

26. The information transmission method according to claim 18, further comprising:
determining, according to the assistance information, a sidelink interface configuration resource of the first device;
sending the sidelink interface configuration resource to the first device.

27. The information transmission method according to claim 26, wherein in a case that the second device is the network device accessed by the first device through the Uu interface, the sidelink interface configuration resource comprises at least one of the following:
a first type of pre-configured grant for the Uu interface configured for the first device;
a second type of pre-configured grant for the Uu interface configured for the first device; or
a dynamically scheduled resource for the Uu interface configured for the first device;
a time domain position of the resource indicated in the pre-configured grant or the dynamically scheduled resource matches a time domain position of the resource indicated in the assistance information.

28. The information transmission method according to claim 26, wherein in a case that the second device is a device responsible for scheduling sidelink interface resources between the first device and the second terminal, the sidelink interface configuration resources comprise at least one of the following:
a first type of pre-configured grant configured for a sidelink interface between the first device and the second terminal; wherein the second terminal is a communication peer that performs a relay communication with the first terminal through the first device;
a second type of pre-configured grant configured for a sidelink interface between the first device and the second terminal;
a dynamically scheduled resource configured for a sidelink interface between the first device and the second terminal.

29. An information transmission device, wherein the information transmission device is a first device and comprises a memory, a transceiver and a processor:
the memory is configured to store a computer program; a transceiver is configured to send and receive data under a control of the processor; and a processor is configured to read the computer program in the memory to perform:
receiving sidelink control information (SCI) sent by a first terminal;
sending assistance information to a second device, wherein the assistance information is generated according to the SCI.

30. The information transmission device according to claim 29, wherein the processor is further configured to perform:
after receiving the SCI sent by the first terminal, in a case that the SCI comprises resource reservation information, generating the assistance information according to the SCI.

31. The information transmission method according to claim 30, wherein the resource reservation information comprises at least one of the following:
resource reservation information of initial transmission resources of sidelink interface;
resource reservation information of retransmission resources of sidelink interface.

32. The information transmission method according to claim 29, wherein the second device is one of the following:
a network device accessed by a first device through a Uu interface;
a device responsible for scheduling sidelink interface resources between the first device and a second terminal;
wherein the second terminal is a communication peer that performs a relay communication with the first terminal through the first device.

33. The information transmission device according to claim 29, wherein the assistance information comprises at least one of the following:
time domain resource indication information;
data size.

34. The information transmission device according to claim 33, wherein the time domain resource indication information is determined according to the resource reservation information carried by the SCI.

35. The information transmission device according to claim 33, wherein the data size is determined according to resource reservation information carried by the SCI and a modulation and coding scheme (MCS) carried by the SCI.

36. The information transmission device according to claim 33, wherein the time domain resource indication information is configured to indicate time domain resource information corresponding to an initial transmission and/or a retransmission.

37. The information transmission device according to claim 36, wherein the time domain resource indication information indicating the time domain resource information corresponding to the retransmission comprises:
indicating a specific time domain resource corresponding to each retransmission.

38. The information transmission device according to claim 36, wherein the time domain resource indication information indicating the time domain resource information corresponding to the initial transmission comprises one of the following:
indicating a starting position and a period of the time domain resource corresponding to the initial transmission;
indicating a starting position, a period and a number of repetitions of the time domain resource corresponding to the initial transmission; or
indicating a starting position, a period and a resource end time of the time domain resource corresponding to the initial transmission.

39. The information transmission device according to claim 29, wherein the SCI is a first-stage SCI or a second-stage SCI.

40. The information transmission device according to claim 29, wherein the processor is further configured to perform:
receiving a sidelink interface configuration resource sent by the second device according to the assistance information;
forwarding sidelink interface data sent by the first terminal, through the sidelink interface configuration resource.

41. The information transmission device according to claim 40, wherein in a case that the second device is the network device accessed by the first device through the Uu interface, the sidelink interface configuration resource comprises at least one of the following:
a first type of pre-configured grant for the Uu interface configured for the first device;
a second type of pre-configured grant for the Uu interface configured for the first device; or
a dynamically scheduled resource for the Uu interface configured for the first device.

42. The information transmission device according to claim 41, wherein the processor is further configured to perform:
forwarding, to the second device, the data which is sent by the first terminal through the sidelink interface, by pre-configuring grant information or dynamically scheduling resources for the Uu interface configured for the first device.

43. The information transmission device according to claim 40, wherein in a case that the second device is the device responsible for scheduling the sidelink interface resources between the first device and the second terminal, the sidelink interface configuration resources comprise at least one of the following:
a first type of pre-configured grant configured for a sidelink interface between the first device and the second terminal;
a second type of pre-configured grant configured for a sidelink interface between the first device and the second terminal; or
a dynamically scheduled resource configured for a sidelink interface between the first device and the second terminal.

44. The information transmission device according to claim 43, wherein the data which is sent by the first terminal through the sidelink interface is forwarded to the second terminal, through the sidelink interface configuration resource.

45. The information transmission device according to claim 32 or 43, wherein the device responsible for scheduling the sidelink interface resources between the first device and the second terminal is the second terminal, or a third terminal different from the first terminal and the second terminal.

46. An information transmission device, wherein the information transmission device is a second device and comprises a memory, a transceiver and a processor:
the memory is configured to store a computer program; a transceiver is configured to send and receive data under a control of the processor; and a processor is configured to read the computer program in the memory to perform:
receiving assistance information sent by a first device, wherein the assistance information is generated by the first device according to sidelink control information (SCI) sent by a first terminal.

47. The information transmission device according to claim 46, wherein the second device is one of the following:
a network device accessed by a first device through a Uu interface;
a device responsible for scheduling sidelink interface resources between the first device and a second terminal;
wherein the second terminal is a communication peer that performs a relay communication with the first terminal through the first device.

48. The information transmission device according to claim 46, wherein the assistance information comprises at least one of the following:
time domain resource indication information;
data size.

49. The information transmission device according to claim 48, wherein the time domain resource indication information is determined according to the resource reservation information carried by the SCI.

50. The information transmission device according to claim 48, wherein the data size is determined according to the resource reservation information carried by the SCI and a modulation and coding scheme (MCS) carried by the SCI.

51. The information transmission device according to claim 48, wherein the time domain resource indication information is configured to indicate time domain resource information corresponding to an initial transmission and/or a retransmission.

52. The information transmission device according to claim 51, wherein the time domain resource indication information indicating the time domain resource information corresponding to the retransmission comprises:
indicating specific time domain resource corresponding to each retransmission.

53. The information transmission device according to claim 51, wherein the time domain resource indication information indicating the time domain resource information corresponding to the initial transmission comprises one of the following:
indicating a starting position and a period of the time domain resource corresponding to the initial transmission;
indicating a starting position, a period and a number of repetitions of the time domain resource corresponding to the initial transmission; or
indicating a starting position, a period and a resource end time of the time domain resource corresponding to the initial transmission.

54. The information transmission device according to claim 46, wherein the processor is further configured to perform:
determining, according to the assistance information, a sidelink interface configuration resource of the first device;
sending the sidelink interface configuration resource to the first device.

55. The information transmission device according to claim 54, wherein in a case that the second device is the network device accessed by the first device through the Uu interface, the sidelink interface configuration resource comprises at least one of the following:
a first type of pre-configured grant for the Uu interface configured for the first device;
a second type of pre-configured grant for the Uu interface configured for the first device; or
a dynamically scheduled resource for the Uu interface configured for the first device;
a time domain position of the resource indicated in the pre-configured grant or the dynamically scheduled resource matches a time domain position of the resource indicated in the assistance information.

56. The information transmission device according to claim 54, wherein in a case that the second device is a device responsible for scheduling sidelink interface resources between the first device and the second terminal, the sidelink interface configuration resources comprise at least one of the following:
a first type of pre-configured grant configured for a sidelink interface between the first device and the second terminal; wherein the second terminal is a communication peer that performs a relay communication with the first terminal through the first device;
a second type of pre-configured grant configured for a sidelink interface between the first device and the second terminal;
a dynamically scheduled resource configured for a sidelink interface between the first device and the second terminal.

57. An information transmission apparatus, applied to a first device and comprising:
a first receiving module, configured to receive sidelink control information (SCI) sent by a first terminal;;
a first sending unit, configured to send assistance information to a second device, wherein the assistance information is generated according to the SCI.

58. The information transmission apparatus according to claim 57, further comprising:
an information generating module, configured to: after receiving the SCI sent by the first terminal, in a case that the SCI comprises resource reservation information, generate the assistance information according to the SCI.

59. The information transmission apparatus according to claim 58, wherein the resource reservation information comprises at least one of the following:
resource reservation information of initial transmission resources of sidelink interface;
resource reservation information of retransmission resources of sidelink interface.

60. The information transmission apparatus according to claim 57, wherein the second device is one of the following:
a network device accessed by a first device through a Uu interface;
a device responsible for scheduling sidelink interface resources between the first device and a second terminal;
wherein the second terminal is a communication peer that performs a relay communication with the first terminal through the first device.

61. The information transmission apparatus according to claim 57, wherein the assistance information comprises at least one of the following:
time domain resource indication information;
data size.

62. The information transmission apparatus according to claim 61, wherein the time domain resource indication information is determined according to the resource reservation information carried by the SCI.

63. The information transmission apparatus according to claim 61, wherein the data size is determined according to the resource reservation information carried by the SCI and a modulation and coding scheme (MCS) carried by the SCI.

64. The information transmission apparatus according to claim 61, wherein the time domain resource indication information is configured to indicate time domain resource information corresponding to an initial transmission and/or a retransmission.

65. The information transmission apparatus according to claim 64, wherein the time domain resource indication information indicating the time domain resource information corresponding to the retransmission comprises: indicating a specific time domain resource corresponding to each retransmission.

66. The information transmission apparatus according to claim 64, wherein the time domain resource indication information indicating the time domain resource information corresponding to the initial transmission comprises one of the following:
indicating a starting position and a period of the time domain resource corresponding to the initial transmission;
indicating a starting position, a period and a number of repetitions of the time domain resource corresponding to the initial transmission; or
indicating a starting position, a period and a resource end time of the time domain resource corresponding to the initial transmission.

67. The information transmission apparatus according to claim 57, wherein the SCI is a first-stage SCI or a second-stage SCI.

68. The information transmission apparatus according to claim 57, wherein:
the first receiving unit is further configured to receive a sidelink interface configuration resource sent by the second device according to the assistance information;
the first sending unit is further configured to forward sidelink interface data sent by the first terminal, through the sidelink interface configuration resource.

69. The information transmission apparatus according to claim 68, wherein in a case that the second device is the network device accessed by the first device through the Uu interface, the sidelink interface configuration resource comprises at least one of the following:
a first type of pre-configured grant for the Uu interface configured for the first device;
a second type of pre-configured grant for the Uu interface configured for the first device; or
a dynamically scheduled resource for the Uu interface configured for the first device.

70. The information transmission apparatus according to claim 69, wherein the first sending unit is further configured to:
forward, to the second device, the data which is sent by the first terminal through the sidelink interface, by pre-configuring grant information or dynamically scheduling resources for the Uu interface configured for the first device.

71. The information transmission apparatus according to claim 68, wherein in a case that the second device is the device responsible for scheduling the sidelink interface resources between the first device and the second terminal, the sidelink interface configuration resources comprise at least one of the following:
a first type of pre-configured grant configured for a sidelink interface between the first device and the second terminal;
a second type of pre-configured grant configured for a sidelink interface between the first device and the second terminal; or
a dynamically scheduled resource configured for a sidelink interface between the first device and the second terminal.

72. The information transmission apparatus according to claim 71, wherein the first sending unit forwards, to the second terminal, the data which is sent by the first terminal through the sidelink interface, through the sidelink interface configuration resource.

73. The information transmission apparatus according to claim 60 or 71, wherein the device responsible for scheduling the sidelink interface resources between the first device and the second terminal is the second terminal, or a third terminal different from the first terminal and the second terminal.

74. An information transmission apparatus, applied to a second device and comprising:
a second receiving unit, configured to receive assistance information sent by a first device, wherein the assistance information is generated by the first device according to sidelink control information (SCI) sent by a first terminal.

75. The information transmission apparatus according to claim 74, wherein the second device is one of the following:
a network device accessed by a first device through a Uu interface;
a device responsible for scheduling sidelink interface resources between the first device and a second terminal;
wherein the second terminal is a communication peer that performs a relay communication with the first terminal through the first device.

76. The information transmission apparatus according to claim 74, wherein the assistance information comprises at least one of the following:
time domain resource indication information;
data size.

77. The information transmission apparatus according to claim 76, wherein the time domain resource indication information is determined according to the resource reservation information carried by the SCI.

78. The information transmission apparatus according to claim 76, wherein the data size is determined according to the resource reservation information carried by the SCI and a modulation and coding scheme (MCS) carried by the SCI.

79. The information transmission apparatus according to claim 76, wherein the time domain resource indication information is configured to indicate time domain resource information corresponding to an initial transmission and/or a retransmission.

80. The information transmission apparatus according to claim 79, wherein the time domain resource indication information indicating the time domain resource information corresponding to the retransmission comprises: indicating specific time domain resource corresponding to each retransmission.

81. The information transmission apparatus according to claim 79, wherein the time domain resource indication information indicating the time domain resource information corresponding to the initial transmission comprises one of the following:
indicating a starting position and a period of the time domain resource corresponding to the initial transmission;
indicating a starting position, a period and a number of repetitions of the time domain resource corresponding to the initial transmission; or
indicating a starting position, a period and a resource end time of the time domain resource corresponding to the initial transmission.

82. The information transmission apparatus according to claim 74, wherein the device further comprises:
a processing unit, configured to determine, according to the assistance information, a sidelink interface configuration resource of the first device;
a second sending unit, configured to send the sidelink interface configuration resource to the first device.

83. The information transmission apparatus according to claim 82, wherein in a case that the second device is the network device accessed by the first device through the Uu interface, the sidelink interface configuration resource comprises at least one of the following:
a first type of pre-configured grant for the Uu interface configured for the first device;
a second type of pre-configured grant for the Uu interface configured for the first device; or
a dynamically scheduled resource for the Uu interface configured for the first device;
a time domain position of the resource indicated in the pre-configured grant or the dynamically scheduled resource matches a time domain position of the resource indicated in the assistance information.

84. The information transmission apparatus according to claim 82, wherein in a case that the second device is a device responsible for scheduling sidelink interface resources between the first device and the second terminal, the sidelink interface configuration resources comprise at least one of the following:
a first type of pre-configured grant configured for a sidelink interface between the first device and the second terminal; wherein the second terminal is a communication peer that performs a relay communication with the first terminal through the first device;
a second type of pre-configured grant configured for a sidelink interface between the first device and the second terminal;
a dynamically scheduled resource configured for a sidelink interface between the first device and the second terminal.

85. A processor-readable storage medium, storing a computer program, wherein the computer program is configured to enable a processor to perform the information transmission method according to any one of claims 1 to 17, or to perform the information transmission method according to any one of claims 18 to 28.
